(19) Europäisches Patentamt

European Patent Office

Office européen des brevets

(11) **EP 1 014 638 A1**

(12) **EUROPEAN PATENT APPLICATION**

(43) Date of publication:
**28.06.2000 Bulletin 2000/26**

(51) Int. Cl.⁷: **H04L 27/26**, H04L 25/03

(21) Application number: **98403253.2**

(22) Date of filing: **22.12.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant: **MOTOROLA, INC.**
**Schaumburg, IL 60196 (US)**

(72) Inventors:
• **De Courville, Mark**
  **75014 Paris (FR)**
• **Demassieux, Nicolas**
  **Basingstoke, Hampshire RG21 7PL (GB)**

(74) Representative:
**Kopacz, William James**
**83, Avenue Foch**
**75116 Paris (FR)**

(54) **Synchronisation techniques for OFDM communications systems**

(57)     An OFDM receiver (2) provides a means for synchronisation of a received signal without the need for transmitting a pilot signal or a dedicated synchronisation signal with the information signal block. This has the advantage of allowing processing capacity otherwise taken up by the synchronising signals to be used for data transmission. By over-sampling the received signal in an analogue to digital converter (8) and minimising the energy in the resulting sub-carriers by means of a feedback loop (13) connected between a fast FOURIER transform demodulator (12) and a digital filter (9), synchronisation of the received signal can be achieved.

EP 1 014 638 A1

**Description**

This invention relates to communications systems and particularly to those employing orthogonal frequency division multiplex (OFDM) modulation methods.

OFDM is a technique whereby information symbols are communicated from a transmitter to a receiver over a plurality of narrow frequency band sub-channels.

Conventionally, discrete FOURIER transform (DFT) OFDM transmission systems employ a transmitter including means for performing fast FOURIER transform (FFT) modulation, cyclic prefix adjunction, parallel to serial conversion and digital to analogue conversion of the information symbols for transmission over a communications channel.

Demodulation of the received signal and reconstruction of the information symbols is achieved in a receiver which includes an analogue to digital converter, a serial to parallel converter and a fast FOURIER transform (FFT) demodulator.

Usually, the sampling rate of the digital to analogue converter in the receiver is identical to the sampling rate of the analogue to digital converter in the transmitter and the size of the FFT modulator is the same as FFT de-modulator.

For correct reconstitution of the information signals at the receiver, the receiver circuitry needs to be synchronised with that of the transmitter. This can be done by means of a pilot signal sent from the transmitter to the receiver and which incorporates a synchronisation pulse, for example. A disadvantage with this method is the need for adding the pilot signal to a portion of the information data stream which could otherwise be used for data.

An object of this invention is to provide a means for synchronising a transmitter and receiver in an OFDM communications system without the need for transmitting a signal which is dedicated to a synchronisation function.

Accordingly, in the first aspect, the present invention comprises; an OFDM receiver for receiving an OFDM modulated signal representing information symbols Xi modulated by a Fourier transform modulator of size N and sampled at a rate $f_T$ in a transmitter, characterised in that the receiver includes, an analogue to digital converter for over-sampling the OFDM modulated signal and having a sampling rate $f_R$ where $f_R$ is greater than $f_T$, to produce a digital output signal comprising a digital representation of the modulated signal, a digital filter having filter co-efficients for filtering the digital output signal to produce a filtered digital signal, a FOURIER transform demodulator of size greater than N for performing a FOURIER transform on the over-sampled filtered digital signal to produce output signals representing a reconstruction of the information symbols Xi and additional side-band carriers, and a feedback loop for feeding the FOURIER transform demodulator outputs representing the additional side-band carriers to the filter, whereby the filter is adapted to adjust its co-efficients so that the energy of the side-band carrier outputs of the FOURIER transform modulator is minimised.

In a second aspect, the present invention comprises; an OFDM receiver for receiving an OFDM modulated signal representing information symbols Xi and appended null symbols wherein the receiver includes, an analogue to digital converter for sampling the OFDM modulated signal to produce a digital output signal comprising a digital representation of the modulated signal, and characterised by a digital filter having filter co-efficients for filtering the digital output signal to produce a filtered digital signal, a FOURIER transform demodulator for performing a FOURIER transform on the filtered digital signal to produce output signals representing a reconstruction of the information symbols Xi and additional side-band carriers representing the null symbols, and a feedback loop for feeding the FOURIER transform demodulator outputs representing the additional side-band carriers to the filter, whereby the filter is adapted to adjust its co-efficients so that the energy of the side-band carrier outputs of the FOURIER transform modulator is minimised.

Thus the receiver of the present invention facilitates a synchronisation process which is based on over-sampling and exploits a particular characteristic of OFDM systems.

In a first embodiment over-sampling the received signal at a higher rate in the receiver than the transmitter and then demodulating with a necessarily larger Fourier transform demodulator than that used in the modulation process results in the generation of additional side-band carriers at the demodulator's outputs. If the transmitting and receiving circuitry are in perfect synchronism (and the transmission and reception processes are noise-free), then these additional side-band carriers are null. If perfect synchronisation is not the case, then the additional side-band carriers will be non-zero. By minimising the energy in the side-band carriers, then synchronisation can be achieved.

Ideally, the side-band carriers would be driven to zero but in practice this cannot be achieved because of the presence of noise. Minimisation of the side carriers, and hence synchronisation, is achieved by means of the filter and feedback loop.

Over-sampling in the receiver is equivalent to appending null symbols to each block of symbols to be modulated in the transmitter. This equivalent arrangement is provided in a second embodiment of the invention. Thus, in a second embodiment, the information to be transmitted has been over-sampled in the transmitter by using a larger Fourier transform modulator than necessary.

This results in appending null symbols to the information symbols, all of which is sampled in a digital to analogue converter and transmitted to the receiver. In the receiver, the appended null symbols appear as additional side-band carriers at the demodulator's outputs. These side-band carriers are null if the transmitter and receiver are in synchronisation. If synchronisation is not the case, however, then these side carriers will be non-zero. Minimisation of the side-band carriers, and hence synchronisation is achieved by means of the filter and feedback loop.

Hence, by forcing the side-band carriers which are generated by the over sampling process towards zero, sample synchronisation at the receiver can be achieved without any synchronisation reference signal being transmitted or received.

Some embodiments of the invention will now be described by way of example only with reference to the drawing which is a block diagram of an OFDM communications system employing a receiver in accordance with the invention.

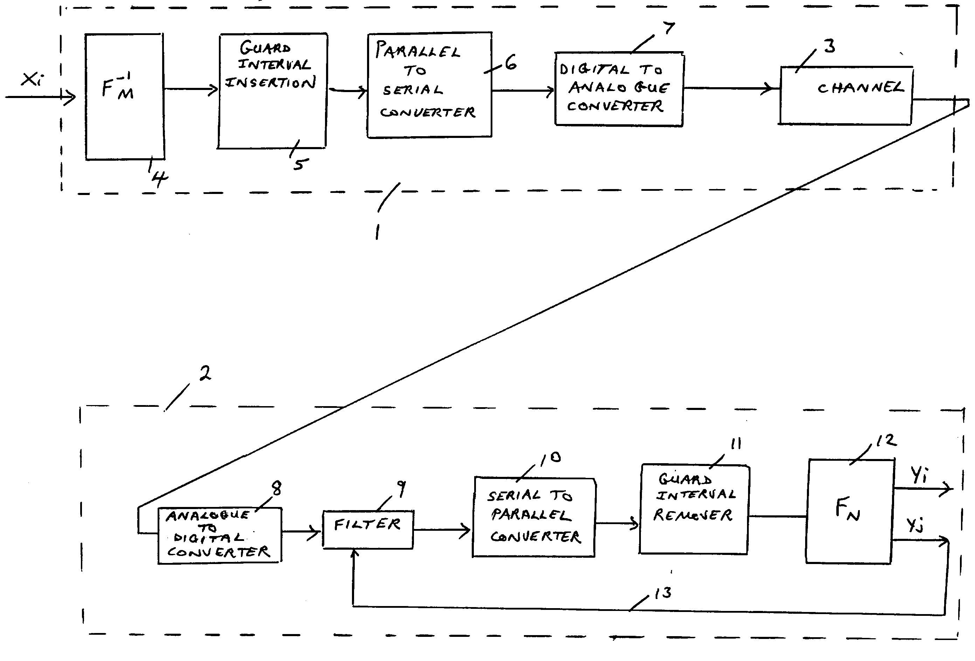

Figure 1 shows a transmitter block 1, a receiver block 2 and a block 3 representing the communications channel over which a modulated information signal Xi is to be transmitted.

In a first embodiment, in the transmitter 1, an inverse Fast FOURIER Transform (FFT) modulator 4 of size M receives the input Xi.

The outputs of the inverse FFT modulator 4 pass through a stage 5 where a guard interval is inserted in accordance with usual practice.

After guard interval insertion, the signals are fed to a parallel to serial converter 6 and then to a digital to analogue converter 7 which operates at a fixed, pre-determined sampling rate, $f_T$. The resulting analogue signal is modulated onto a carrier in accordance with usual practice and transmitted over the communications channel 3 for reception at the receiver block 2.

At the receiver 2, the incoming signal is sampled in a analogue to digital converter 8 at a rate $f_R$ greater than the sampling rate of the digital to analogue converter 7 in the transmitter 1.

The output of the analogue to digital converter 8 is then fed to a linear digital filter 9 whose function is to be described below. The output of the filter 9 is fed into a serial to parallel converter 10 whose outputs yi are fed via a guard interval remover 11 to a fast FOURIER transform de-modulator 12 of size N which is necessarily larger than the inverse FFT modulator 4 of the receiver. I.e., N > M and

$$\frac{N}{f_R} = \frac{M}{f_T}$$

Reconstruction of the symbols Xi therefore appears at the outputs of Yi of the FFT demodulator 12 along with additional side-band carrier outputs Yj generated as a result of the over-sampling process.

Frequency equalisation can be performed on the outputs Yi of the demodulator 12 in accordance with usual practice.

In accordance with the invention, a feedback loop from outputs Yj representing the additional side-band carriers are fed back via a feedback loop 13 to the filter 9.

In a second alternative embodiment the structure of the transmitter 1 and the receiver 2 is as shown in Figure 1 with the following differences. The sample rate of the digital to analogue converter 7 is the same as that of the analogue to digital converter 8. The size of the universe FFT modulator 4 and the FFT demodulator 11 are both equal to N.

The size of the modulator 4 is larger than necessary for modulation of the signal Xi so that null symbols are present at the transmitter 1. Demodulation in the receiver 2, then produces the desired signal Yi plus additional side-band carriers Yj. These side-band carriers output by the demodulator 12 are fed back to the filter 9.

In operation of either embodiment, consider firstly the ideal case where there is no distortion, no added noise and perfect synchronisation is assumed. When the received signal is sampled in the analogue to digital converter 8 the information signal Xi can be retrieved at the outputs Yi of the demodulator 12 while the remaining side-band carrier outputs Yj are null.

In the presence of channel memory shorter than the guard interval, however, the last part of a received block corresponds to a cyclic convolution between the transmitted data and the channel 3. Thus, since the symbols are modulated by an inverse discrete FOURIER transform (i.e. the FFT modulator 4), and since the received samples are demodulated by a discrete FOURIER transform (i.e. the FFT demodulator 12), any channel distortion will result in N complex gain factors in the frequency domain, one per sub-band. In this case, any null symbols present are also retrieved but are not affected by the channel 3. Moreover, equalisation can be performed after demodulation simply by dividing each FOURIER transformed output by the corresponding co-efficient of the frequency response of the channel 3. This method is very efficient for non noisy channels and has a small arithmetic complexity.

Note that a time synchronisation error can always be interpreted as a delay which can be incorporated in the channel 3. Thus, as long the equivalent channel time spread does not exceed the guard time, no modification of the receiver structure is required. The frequency equaliser co-efficients have simply to be updated and, of course, the null symbols are not affected.

On the other hand, when a larger timing error occurs the cyclic convolution property is lost so that all outputs from the demodulator 12 are non-zero(even in the absence of noise). By tuning the linear digital filter 9 so that the energy in the demodulator outputs Yj is minimised, synchronisation can be achieved.

For example, in order to perform this task, the filter 9 can be tuned adaptively in order to minimize a quadratic criterion $J_z$ based on the mean energy of demodulated sub-carrier signals Yj that should be minimised.

$$\text{I.e. } J_z = \Sigma \, E/Y_j/^2$$

Since OFDM systems are basically a block type, one convenient way of updating the filter 9 is by using an adaptive algorithm such as a block least mean square algorithm.

For example, if $\hat{J}_z$ is the instantaneous estimator of $J_z$; a classical least means square-like adaptation of the filter 9 leads to:

$$W(n+1) = W(n) - \frac{\mu d \hat{J}_z}{dw^*}(n)$$

$\mu$ denotes the positive scalar step size controlling the convergence of the adaptive process. W(n) are the filter co-efficients.

In order to avoid the filters convergence towards zero, a norm constraint can be applied by dividing the filter by its norm at each iteration after the update,

$$W(n+1) \leftarrow W(n+1)/[W^H(n+1)W(n+1)]^{\frac{1}{2}}$$

combined with thresholding techniques to enhance the convergence rate of the synchronisation procedure.

For example, in order to accelerate the convergence rate, a thresholding technique can be applied which quantizes periodically the filter taps to the values of 0 or 1. This leads to a high increase of convergence in comparison with the classical adaptive stolastic minimization of $J_z$. Hence, at each block of received samples, the filter 9 is updated in order to minimize the mean power of the Yj outputs of the demodulator 12 under the constraint that only consecutive taps of the synchroniser should not be null and all equal to the same constant.

## Claims

1. An orthogonal frequency division multiplex (OFDM) receiver (2) for receiving an OFDM modulated signal representing information symbols Xi sampled at rate $f_T$ in a transmitter (1), characterised in that the receiver (2) includes an analogue to digital converter (8) for sampling the OFDM modulated signal and having a sampling rate $f_R$, where $f_R$ is greater than $f_T$, to produce a digitial output signal comprising a digital representation of the modulated signal, a digital filter (9) having filter co-efficients, for filtering the digital output signal to produce a filtered digital signal, a FOURIER transform demodulator (12) for performing a FOURIER transform on the filtered digital signal to produce output signals Yi representing a reconstruction of the information symbols Xi and additional side-band carriers Yj, and a feedback loop (13) for feeding the FOURIER transform demodulator (12) outputs representing the additional side-band carriers Yj to the filter (9), whereby the filter (9) is adapted to adjust its co-efficients so that the energy of the side-band carrier outputs Yj of the FOURIER transform demodulator (12) is minimised.

2. An OFDM receiver (2) for receiving an OFDM modulated signal representing information symbols Xi and appended null symbols, wherein the receiver includes, an analogue to digital converter (8) for sampling the OFDM modulated signal, to produce a digital output signal comprising a digital representation of the modulated signal, and characterised by a digital filter (9) having filter co-efficients for filtering the digital output signal to produce a filtered digital signal, a FOURIER transform demodulator (12) for performinga FOURIER transform on the filtered digital signal to produce output signals Yi representing a reconstruction of the information symbols Xi and additional side-band carriers Yj, and a feedback loop (13) for feeding the FOURIER transform demodulator outputs Yj representing the additional side-band carriers to the filter (9), whereby the filter (9) is adapted to adjust its co-efficients so that the energy of the sided-band carrier outputs of the FOURIER transform modulator (12) is minimised.

3. An OFDM receiver (2) according to Claim 1 or Claim 2 in which the filter (9) is adapted to adjust its co-efficients so to minimize a quadratric criterion $J_z$ related to the mean energy of the side-band carrier signals Yj as follows:

$$J_z = \Sigma E/Yj/^2$$

4. An OFDM receiver (2) according to Claim 3 in which the filter (9) is adapted to update its co-efficients W(n) by means of a block least mean square algorithm such that;

$$\underline{W}(n+1) = \underline{W}(n) - \frac{\mu d \hat{J}_z}{dw^*}$$

5. An OFDM receiver (2) according to Claim 4 in which the filter (9) is adapted to operate under the constraint that only consecutive filter taps are set to be non-null and all equal to the same constant.

**European Patent Office**

**EUROPEAN SEARCH REPORT**

Application Number

EP 98 40 3253

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 797 333 A (TELEDIFFUSION FSE ;FRANCE TELECOM (FR)) 24 September 1997 <br> * the whole document * | 1-5 | H04L27/26 <br> H04L25/03 |
| | | | **TECHNICAL FIELDS SEARCHED (Int.Cl.6)** |
| | | | H04L |

The present search report has been drawn up for all claims

| Place of search | Date of completion of the search | Examiner |
|---|---|---|
| THE HAGUE | 27 May 1999 | Toumpoulidis, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 98 40 3253

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-1999

| Patent document cited in search report | Publication date | Patent family member(s) | Publication date |
|---|---|---|---|
| EP 0797333 A | 24-09-1997 | FR 2746238 A | 19-09-1997 |

EPO FORM P0459

For more details about this annex : see Official Journal of the European Patent Office, No. 12/82